# EUROPEAN PATENT APPLICATION

(11) **EP 4 266 479 A1**
(43) Date of publication of application: **25.10.2023**
(21) Application number: 22836977.3
(22) Date of filing: 06.07.2022
(51) Int. Cl.: H01M 50/593, H01M 50/55

(54) **BATTERY CELL, BATTERY AND POWER CONSUMING DEVICE**

(30) Priority: 09.07.2021 CN 202110779170
(71) Applicant: Contemporary Amperex Technology Co., Limited, Ningde, Fujian 352100 (CN)
(72) Inventor: SU, Huasheng, Ningde, Fujian 352100 (CN); XING, Chengyou, Ningde, Fujian 352100 (CN); LI, Quankun, Ningde, Fujian 352100 (CN); WANG, Peng, Ningde, Fujian 352100 (CN)
(74) Representative: Rowlands, Stuart Michael
(86) International application number: PCT/CN2022/104194
(87) International publication number: WO 2023/280232

(57) **Abstract**

Provided are a battery cell (6), a battery (2) and a power consuming device. The battery cell (6) comprises an adapter member (64), wherein the adapter member (64) is formed by connecting a first insulation portion (643) to a first adapter portion (641) and a second adapter portion (642); and the first insulation portion (643) is located between the first adapter portion (641) and the second adapter portion (642) and used to prevent the first adapter portion (641) from being electrically connected to the second adapter portion (642). For the battery cell (6) provided, the occurrence of internal short-circuits caused by the overlapping of a positive-electrode adapter member and a negative-electrode adapter member can be reduced, so as to decrease the probability of the occurrence of internal failure of the battery cell (6), which can improve the safety performance of the battery cell (6), and the manufacturing process of the battery cell (6) can also be reduced to improve the manufacturing efficiency.

## Description

### Cross Reference to Related Applications

The present application claims priority of Chinese Patent Application No. 202110779170.4 filed on July 9, 2021 and entitled "BATTERY CELL, BATTERY, AND ELECTRICAL APPARATUS," which is incorporated herein by reference in its entirety.

### Technical Field

The present application relates to the field of batteries, and in particular to a battery cell, a battery, and an electrical apparatus.

### Background Art

With continuous development of new energy technologies, people's requirements for battery technology are getting higher and higher. For example, requirements for battery safety performance are also gradually increasing. If the battery safety performance is low, fire, explosions, and other accidents may be easily caused in a process of using the battery, thus endangering personal safety. Therefore, how to improve the safety performance of the battery is an urgent problem to be solved in the field.

### Summary of the Invention

In view of the above problems, a battery cell, a battery, and an electrical apparatus are provided in embodiments of the present application, which is capable of effectively improving safety performance of the battery cell.

An embodiment in a first aspect of the present application provides a battery cell. The battery cell includes a first electrode terminal and a second electrode terminal with opposite polarities, an electrode assembly, and an adapter. The electrode assembly includes a first tab and a second tab with opposite polarities. The first tab and the second tab are located at the same end of the electrode assembly.

The adapter includes a first adapter portion, a second adapter portion, and a first insulating portion, the first adapter portion is used to connect the first tab and the first electrode terminal; the second adapter portion is used to connect the second tab and the second electrode terminal; the first insulating portion is used to connect the first adapter portion and the second adapter portion, and the first insulating portion is located between the first adapter portion and the second adapter portion to prevent electrical connection between the first adapter portion and the second adapter portion.

By adopting the above solution, the first adapter portion and the second adapter portion, which are respectively used to connect the first tab and the second tab with opposite polarities, may be formed into an integrated adapter through the connection of the first insulating portion. The first insulating portion is arranged between the first adapter portion and the second adapter portion, and can prevent contact between the first adapter portion and the second adapter portion from forming an internal short circuit, thereby reducing a probability of internal short circuit of the battery cell, and improving the safety performance of the battery cell. At the same time, the adoption of the integrated adapter can further reduce the process, facilitate the installation, and improve the efficiency of manufacturing battery cells.

In some embodiments, in the length direction of the adapter, the first insulating portion is continuously arranged between the first adapter portion and the second adapter portion.

By adopting the above solution, the probability of short circuit caused by lapping at any position between the first adapter portion and the second adapter portion can be reduced. In addition, when the adapter needs to be bent, the continuously arranged first insulating portion is capable of making the adapter have good consistency during bending, and reduce the probability of short circuit caused by lapping due to bending.

In some embodiments, the first insulating portion is made of a flexible material, and the adapter is shaped by bending.

By adopting the above solution, the adapter made of the flexible material is easier to bend, and the first insulating portion has a certain elasticity when bending, so that the adapter is not likely to be broken when bending, thereby improving the reliability of the adapter.

In some embodiments, the first insulating portion includes a plurality of insulating blocks arranged at intervals, and the plurality of insulating blocks are arranged between the first adapter portion and the second adapter portion.

By adopting the above solution, a gap may be left in a space between part of the first adapter portion and the second adapter portion while using insulating blocks to connect the first adapter portion and the second adapter portion. Since there are still some insulating blocks connected between the first adapter portion and the second adapter portion to avoid the contact between the first adapter portion and the second adapter portion, the first adapter portion and the second adapter portion are not likely to overlap and cause a short circuit, and the arrangement of insulating blocks at intervals is also capable of saving materials and reduce costs.

In some embodiments, the adapter is shaped by bending at intervals between at least two adjacent insulating blocks.

By adopting the above solution, the interval between adjacent insulating blocks is easier to bend, and therefore, it is only necessary to bend the first adapter portion and the second adapter portion during bending, instead of bending the insulating block, thereby facilitating the adapter to be shaped by bending.

In some embodiments, in the thickness direction of the adapter, the first insulating portion protrudes from a surface of the adapter to form a first protruding part.

By adopting the above solution, the first protruding part can increase a creepage distance between the first adapter portion and the second adapter portion, so that the adapter is also not likely to form an internal short circuit under a lapping of other components or metal foreign matters.

In some embodiments, in the length direction of the adapter, the first insulating portion is arranged at one end of the adapter, the first adapter portion and the second adapter portion have a gap at the other end of the adapter, and the adapter is shaped by bending so that the first protruding part is inserted into the gap.

By adopting the above solution, the first adapter portion and the second adapter portion may be respectively located on both sides of the first insulating portion after being bent, so as to prevent the first adapter portion and the second adapter portion from forming a lapping. Moreover, the first protruding part is inserted into the gap, which can also prevent the adapter from rotating during use to cause lapping of the first adapter portion and the second adapter portion. In addition, the first insulating portion does not need to be bent, which reduces the processing difficulty.

In some embodiments, in the thickness direction of the adapter, the height of the first protruding part is greater than or equal to a maximum thickness of the first adapter portion or the second adapter portion.

By adopting the above solution, the first protruding part may be at least partially inserted into the gap. When the adapter is shaped by bending, the volume of the first protruding part that is capable of being inserted into the gap is different due to a different bending angle. Under any bending angle, the height of the first protruding part is made to be greater than or equal to the maximum thickness of the first adapter portion and second adapter portion, which is capable of improving the ability of the first insulating portion to prevent lapping of the first adapter portion and the second adapter portion, and improve the overall reliability of the adapter.

In some embodiments, a spacing space is arranged between the first tab and the second tab, the first insulating portion protrudes toward the spacing space to form a second protruding part, and at least part of the second protruding part is located in the spacing space.

By adopting the above solution, inserting the second protruding part into the spacing space between the first tab and the second tab can increase the creepage distance of the first adapter portion and the second adapter portion, reduce the probability of lapping the first tab and the second tab, and improve the safety performance of the battery cell.

In some embodiments, a region near the bend on the adapter is provided with a weak region.

By adopting the above solution, the region near the bend on the adapter has a lower stiffness than other regions and is easier to bend.

In some embodiments, the first electrode terminal and the second electrode terminal are located at the same end of the battery cell. The battery cell further includes a second insulating portion. The second insulating portion is used to connect the first electrode terminal and the second electrode terminal, and the second insulating portion is located between the first electrode terminal and the second electrode terminal to prevent electrical connection between the first electrode terminal and the second electrode terminal.

By adopting the above solution, the first electrode terminal and the second electrode terminal may be formed into an integrated type. By arranging the second insulating portion between the first electrode terminal and the second electrode terminal, the probability of a short circuit caused by the lapping of the first electrode terminal and the second electrode terminal can be reduced, and the safety of the battery cell can be improved. At the same time, the integrated electrode terminal can also reduce the process and improve the manufacturing efficiency of the battery cell.

An embodiment in a second aspect of the present application further provides a battery, including a battery cell in any of the above embodiments, and a box body for accommodating the battery cell.

An embodiment in a third aspect of the present application further provides an electrical apparatus, including the battery provided by the embodiment in the second aspect of the present application, and the battery is used for providing electric energy for the electrical apparatus.

The above description is only a summary of the technical solutions of the embodiments of the present application. In order to be capable of understanding the technical means of the embodiments of the present application more clearly, the technical means can be implemented according to the content of the specification. Furthermore, to make the above and other objectives, features, and advantages of the embodiments of the present application more comprehensible, specific implementations of the present application are exemplified below.

### Description of Drawings

Other features, objectives, and advantages of the present application will become more apparent by reading the following detailed description of non-limiting embodiments with reference to the accompanying drawings, wherein the same or similar reference numerals represent the same or similar features.
Fig. 1 is a structural schematic diagram of a vehicle according to an embodiment of the present application;
Fig. 2 is a schematic exploded diagram of a battery according to some embodiments of the present application;
Fig. 3 is a schematic exploded diagram of a battery cell according to some embodiments of the present application;
Fig. 4 is a structural schematic diagram of an electrode assembly shown in Fig. 3;
Fig. 5 is a structural schematic diagram of an end cover shown in Fig. 3;
Fig. 6 is a structural schematic diagram of an adapter according to some embodiments of the present application;
Fig. 7 is a schematic sectional diagram in an A-A direction shown in Fig. 6;
Fig. 8 is a structural schematic diagram of the adapter shown in Fig. 6 after bending;
Fig. 9 is a structural schematic diagram of an adapter according to other embodiments of the present application;
Fig. 10 is a structural schematic diagram of the adapter shown in Fig. 9 after bending;
Fig. 11 is a structural schematic diagram of the adapter according to still other embodiments of the present application;
Fig. 12 is a structural schematic diagram of an adapter according to yet other embodiments of the present application;
Fig. 13 is a locally enlarged diagram at K in Fig. 12;
Fig. 14 is a structural schematic diagram of an electrode assembly according to some embodiments of the present application;
Fig. 15 is a schematic assembly diagram of an adapter and an electrode assembly according to some embodiments of the present application;
Fig. 16 is a locally enlarged diagram at M in Fig. 15; and
Fig. 17 is a structural schematic diagram of an end cover according to some embodiments of the present application.

### Description of reference numerals:

1- Vehicle;
2-Battery;
3-Controller;
4-Motor;
5-Box body, 51-First box body portion, 52-Second box body portion, 53-Accommodating space, 54-Frame;
6-Battery cell;
61-Electrode assembly, 611-First tab, 612-Second tab, 613-Spacing space;
62-First electrode terminal;
63-Second electrode terminal;
64-Adapter, 641-First adapter portion, 642-Second adapter portion, 643-First insulating portion, 643a-Insulating block, 643b-First protruding part, 643c-Gap, 643d-Second protruding part, 644-Weak region;
65-Second insulating portion;
66-Case;
67-End cover;
X-Length direction of the adapter, Y-Thickness direction of the adapter;
H1-Height of the first protruding part in the Y direction; and
H2-Thickness of the first adapter portion in the Y direction.

### Detailed Description

To make the objectives, technical solutions, and advantages of the embodiments of the present application clearer, the technical solutions in the embodiments of the present application will be clearly described below with reference to the drawings in the embodiments of the present application. It will be apparent that the embodiments described are some of rather than all of the embodiments of the present application. Based on the embodiments in the present application, all other embodiments obtained by those of ordinary skill in the art without creative effort fall within the protection scope of the present application.

Unless otherwise defined, all technical and scientific terms used in the present application have the same meanings as those commonly understood by those skilled in the art to which the present application belongs. The terms used in the specification of the present application are merely for the purpose of describing specific embodiments, but are not intended to limit the present application. The terms "comprising" and "having" and any variations thereof in the specification and the claims of the present application as well as the foregoing description of the drawings are intended to cover non-exclusive inclusions. Terms "first," "second," and the like in the specification and claims of the present application or the above drawings are used for distinguishing different objects, rather than describing a specific sequence or primary-subordinate relationship.

Reference herein to "an embodiment" in the present application means that a particular feature, structure, or characteristic described with reference to the embodiment may be included in at least one embodiment of the present application. The appearance of this phrase in various places in the specification does not necessarily refer to the same embodiment, nor is it a separate or alternative embodiment that is mutually exclusive with other embodiments.

In the description of the present application, it should be noted that the terms "mounting," "connecting," "connection," and "attachment" should be understood in a broad sense, unless otherwise explicitly specified or defined. For example, it may be a fixed connection, a detachable connection, or an integrated connection; and it may be a direct connection or an indirect connection through an intermediate medium, or may be a communication of interiors of two elements. For those of ordinary skill in the art, the specific meanings of the above terms in the present application may be understood according to specific situations.

In the present application, the term "and/or" is only an association relationship for describing associated objects, indicating that three relationships may exist. For example, A and/or B may represent three situations: A exists alone, both A and B exist, and B exists alone. In addition, the character "/" in the present application generally means that the associated objects before and after it are in an "or" relationship.

In the embodiments of the present application, the same reference numerals denote the same components. For the sake of brevity, detailed descriptions of the same components are omitted in different embodiments. It should be understood that the thickness, length, width, and other dimensions of the various components in the embodiments of the application shown in the drawings, as well as the overall thickness, length, and width of the integrated device, are for illustrative purposes only, and should not constitute any limitation to the present application.

"A plurality of" in the present application refers to two or more (including two).

In an existing battery cell structure, the battery cell usually supplies power by arranging a positive electrode terminal and a negative electrode terminal for connecting to an electrical circuit. When the positive electrode terminal and the negative electrode terminal of the battery cell are configured on different ends of the battery cell, a certain space needs to be reserved on each end face equipped with a positive electrode terminal and a negative electrode terminal for electrical connection. In this way, it needs to consume more space in the battery cell, resulting in an increase in the overall volume of the battery cell or a decrease in an overall energy density.

Therefore, in order to improve the energy density, the positive electrode terminal and the negative electrode terminal of the battery cell may be simultaneously arranged on one end of the battery cell. In this way, only one end of the battery cell needs to be reserved for electrical connection, which can effectively improve the energy density of the battery cell as a whole. However, the inventor found that in the existing battery cell structure, when the positive electrode terminal and the negative electrode terminal are simultaneously arranged on the same end of the battery cell, a positive adapter and a negative adapter arranged inside the battery cell are easy to form a lapping due to vibration or collision, resulting in an internal short circuit and causing a safety problem of the battery cell. Alternatively, even if the positive electrode terminal and the negative electrode terminal are not located at one end of the battery cell, the positive adapter and the negative adapter may also form a lapping due to vibration or collision, which may also cause a safety problem.

In view of this, the present application provides a battery cell. The battery cell uses an adapter including a first adapter portion and a second adapter portion, and a first insulating portion is used between the first adapter portion and the second adapter portion to connect them. In this way, the first insulating portion can connect the first adapter portion and the second adapter portion and ensure mutual insulation of the two, which is capable of effectively improving the safety performance of the battery cell and prevent a problem of short circuit of the battery cell caused by a lapping of the first adapter portion and the second adapter portion inside the battery cell.

The battery cell described in the embodiment of the present application is applicable to a battery and an electrical apparatus using the battery.

The electrical apparatus may be, but not limited to, a vehicle, a mobile phone, a portable device, a laptop computer, a ship, a spacecraft, an electric toy, an electric tool, and the like. The vehicle may be a fuel vehicle, a gas vehicle or a new-energy vehicle. The new-energy vehicle may be an all-electric vehicle, a hybrid electric vehicle, an extended-range electric vehicle, or the like. The spacecraft includes airplanes, rockets, space shuttles, spaceships, and the like. The electric toy includes fixed or mobile electric toys, such as game consoles, electric car toys, electric ship toys and electric aircraft toys. The electric tool includes metal cutting electric tools, grinding electric tools, assembly electric tools and railway electric tools, such as electric drills, electric grinders, electric wrenches, electric screwdrivers, electric hammers, impact drills, concrete vibrators and electric planers. The electrical apparatus is not specially limited in the embodiments of the present application.

In the following embodiments, for the convenience of description, take the electrical apparatus as an example to illustrate the vehicle.

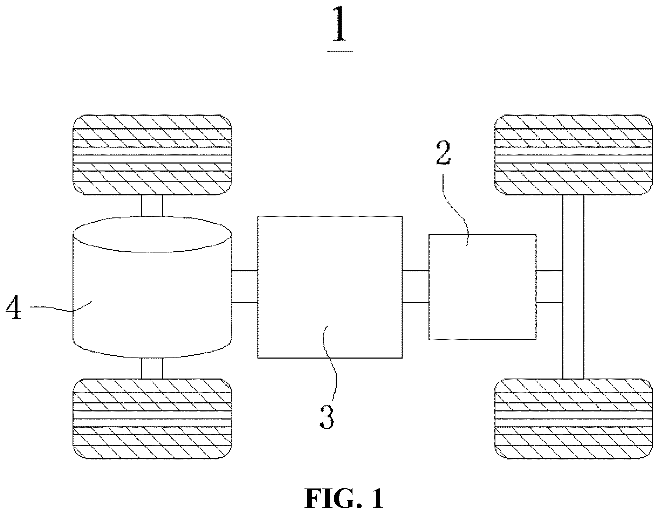

Referring to Fig. 1, Fig. 1 is a structural schematic diagram of vehicle 1 according to some embodiments of the present application. As shown in Fig. 1, an interior of vehicle 1 is equipped with battery 2, and battery 2 refers to a single physical module including one or more battery cells to provide higher voltage and capacity. For example, the battery mentioned in the present application may include battery modules or battery packs and the like. Battery 2 may be arranged at the bottom, head, or tail of vehicle 1. Battery 2 may be used for supplying power for vehicle 1, for example, battery 2 may be used as an operating power source of vehicle 1. Vehicle 1 may also include controller 3 and motor 4. Controller 3 is used for controlling battery 2 to supply power to motor 4, for example, for working power requirements during starting, navigation, and driving of vehicle 1.

In some embodiments of the present application, battery 2 may not only be used as the operating power source of vehicle 1, but also as a driving power source of vehicle 1, replacing or partially replacing fuel or natural gas to provide driving power for vehicle 1.

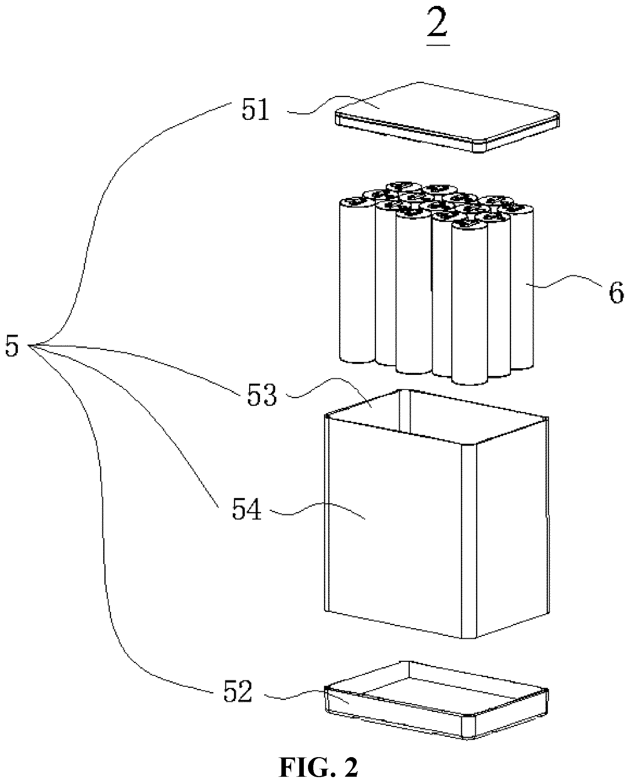

Referring to Fig. 2, Fig. 2 is a schematic exploded diagram of battery 2 according to some embodiments of the present application. As shown in Fig. 2, battery 2 includes box body 5 and battery cell 6, and battery cell 6 is contained in box body 5.

Box body 5 is used for accommodating battery cell 6. Box body 5 may be of various structures. In some embodiments, box body 5 may include first box body portion 51, second box body portion 52, and frame 54. Frame 54 may be a hollow structure with openings at both ends, and first box body portion 51 and second box body portion 52 are respectively covered at the openings at both ends. Frame 54, first box body portion 51, and second box body portion 52 jointly define accommodating space 53 for accommodating battery cell 6. First box body portion 51 and second box body portion 52 may be of a hollow structure with an opening at one end or may be of a plate structure. Frame 54 may be of various shapes, such as a cylinder and a cuboid. In order to improve the sealing performance of first box body portion 51, second box body portion 52, and frame 54 after connection, sealing members, such as sealant and sealing rings, may be arranged between first box body portion 51, second box body portion 52, and frame 54. Assuming that first box body portion 51 is covered on the top of frame 54 and the second box body portion 52 is covered on the bottom of frame 54, first box body portion 51 may also be referred to as an upper box cover, and second box body portion 52 may also be referred to as a lower box cover.

In battery 2, there are a plurality of battery cells 6. The plurality of battery cells 6 may be connected in series or parallel or in a series-parallel connection, and the series-parallel connection means that the plurality of battery cells 6 are connected in both series and parallel. The plurality of battery cells 6 may be directly connected in series or parallel or in series-parallel connection together, and then the whole of the plurality of battery cells 6 is accommodated within box body 5. Of course, it may also be such that a plurality of battery cells 6 are first connected in series or parallel or in mixed connection to form a battery module (not shown), and a plurality of battery modules are connected in series or parallel or in mixed connection to form a whole and is accommodated within box body 5.

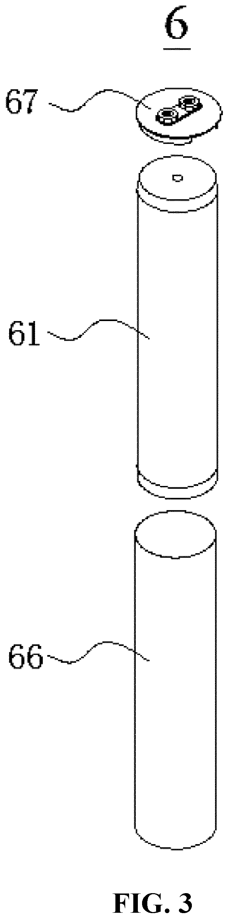

Referring to Fig. 3 to Fig. 7, battery cell 6 is provided in an embodiment of the present application, and the battery cell 6 includes electrode assembly 61, first electrode terminal 62, second electrode terminal 63, and adapter 64. Electrode assembly 61 includes first tab 611 and second tab 612 with opposite polarities, and first tab 611 and second tab 612 are located at the same end of electrode assembly 61. The polarity of first electrode terminal 62 is opposite to that of second electrode terminal 63. Adapter 64 includes first adapter portion 641, second adapter portion 642, and first insulating portion 643. First adapter portion 641 is used to connect first tab 611 and first electrode terminal 62, second adapter portion 642 is used to connect second tab 612 and second electrode terminal 63, and first insulating portion 643 is used to connect first adapter portion 641 and second adapter portion 642. Moreover, first insulating portion 643 is located between first adapter portion 641 and second adapter portion 642 to prevent electrical connection between first adapter portion 641 and second adapter portion 642.

In some embodiments of the present application, battery cell 6 may include a lithium-ion secondary battery cell, a lithium-ion primary battery cell, a lithium-sulfur battery cell, a sodium/lithium ion battery cell, a sodium-ion battery cell, a magnesium-ion battery cell, or the like, which is not limited in the embodiments of the present application. Battery cell 6 may be cylindrical, flat, cuboid, or in other shapes, which is also not limited in the embodiments of the present application. For the convenience of description, the battery in a cylindrical shape is used as an example in the following embodiments. Battery cells 6 are generally classified into three types according to encapsulating manners: cylindrical battery cells, rectangular battery cells, and pouch battery cells, which are not limited in the embodiments of the present application.

In some embodiments of the present application, refer to Fig. 3, which is a schematic exploded diagram of battery cell 6 provided according to some embodiments of the present application. Battery cell 6 may include electrode assembly 61, case 66, end cover 67, and an electrolyte solution (not shown in the figures), and electrode assembly 61 may include a positive electrode sheet, a negative electrode sheet, and a spacer (which are all not shown in the figures). Battery cell 6 operates mainly relying on movement of metal ions between the positive electrode sheet and the negative electrode sheet. The positive electrode sheet comprises a positive electrode current collector and a positive electrode active material layer, the positive electrode active material layer is coated on a surface of the positive electrode current collector. The positive electrode current collector includes a positive electrode current collector portion coated with the positive electrode active material layer. Taking a lithium-ion battery as an example, the material of the positive electrode current collector may be aluminum, the positive electrode active material layer includes a positive electrode active material, and the positive electrode active material may be lithium cobalt oxide, lithium iron phosphate, ternary lithium, lithium manganate, or the like. The negative electrode sheet includes a negative electrode current collector and a negative electrode active material layer, the negative electrode active material layer is coated on a surface of the negative electrode current collector. The negative electrode current collector includes a negative electrode current collector portion coated with the negative electrode active material layer. The material of the negative electrode current collector may be copper, the negative electrode active material layer includes a negative electrode active material, and the negative electrode active material may be carbon, silicon, or the like. The spacer may be made from polypropylene (PP), polyethylene (PE), or the like. In addition, electrode assembly 61 may have a wound structure or a laminated structure, which is not limited in the embodiments of the present application. Case 66 may have an opening at one end or have openings at both ends, and end cover 67 is covered at the opening of case 66 to form an accommodating space together with case 66, for accommodating electrode assembly 61 and the electrolyte solution. Optionally, case 66 and end cover 67 may be made of the same material. For example, case 66 and end cover 67 may both be made of aluminum, so that it is easy to weld case 66 and end cover 67. Alternatively, case 66 and end cover 67 may also be made of different materials. For example, case 66 and end cover 67 may be made of different metals respectively, and other connection methods such as riveting may be used for to connecting case 66 and end cover 67.

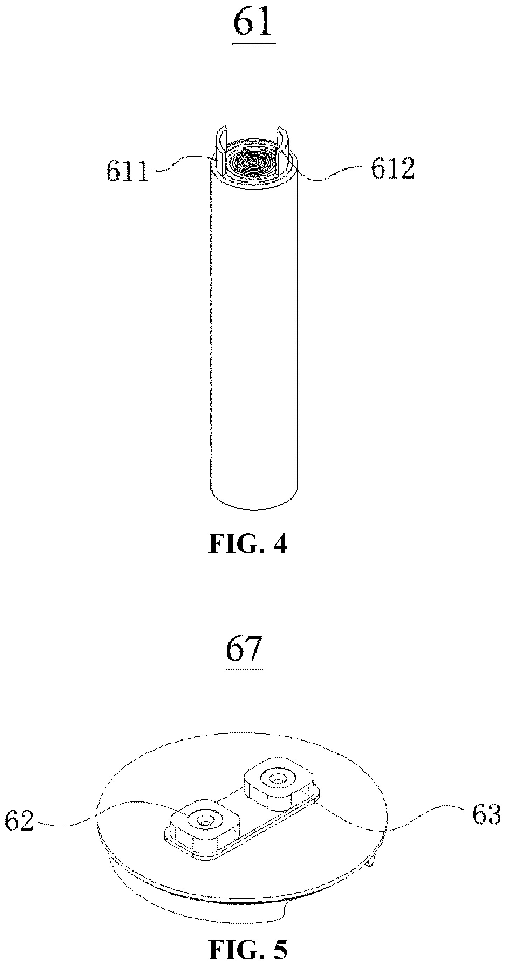

Referring to Fig. 4, Fig. 4 is a structural schematic diagram of electrode assembly 61 shown in Fig. 3. In the present application, electrode assembly 61 further includes first tab 611 and second tab 612 with opposite polarities. First tab 611 and second tab 612 are located on the same end of electrode assembly 61. First tab 611 and second tab 612 may be positive tab and negative tab respectively. For example, first tab 611 is a positive tab and second tab 612 is a negative tab. The positive electrode current collector further includes a positive electrode convex portion protruding from the positive electrode current collector portion, and at least part of the positive electrode convex portion is not coated with the positive electrode active material layer to serve as a positive tab. The negative electrode sheet further includes a negative electrode convex portion protruding from the negative electrode current collector portion, and at least part of the negative electrode convex portion is not coated with the negative electrode active material layer to serve as a negative tab. In order to ensure no fusing through high current, there may be a plurality of positive tabs stacked together, and there may also be a plurality of negative tabs stacked together. First tab 611 and second tab 612 have opposite polarities and are located on the same end, which facilitates battery cell 6 to lead out the positive electrode terminal and the negative electrode terminal from the same end.

Still referring to Fig. 4 and Fig. 5, Fig. 5 is a structural schematic diagram of end cover 67 shown in Fig. 3. In the present application, battery cell 6 further includes first electrode terminal 62 and second electrode terminal 63 with opposite polarities. First electrode terminal 62 and second electrode terminal 63 may be located at the same end of battery cell 6. First electrode terminal 62 and second electrode terminal 63 are both used to connect components outside battery cell 6 to establish a current loop. First electrode terminal 62 and second electrode terminal 63 may be a positive electrode terminal and a negative electrode terminal respectively, for example, first electrode terminal 62 may be the positive electrode terminal, and second electrode terminal 63 may be the negative electrode terminal. It should be noted here that the polarity of first tab 611 is consistent with that of first electrode terminal 62, the polarity of second tab 612 is consistent with that of second electrode terminal 63, so that first tab 611 is electrically connected to first electrode terminal 62, and second tab 612 is electrically connected to second electrode terminal 63. Optionally, first electrode terminal 62 and second electrode terminal 63 may be one or more additional components arranged on the end face of battery cell 6, or case 66 or end cover 67 of battery cell 6 may be used as the positive electrode terminal or the negative electrode terminal. In addition, end cover 67 may also be provided with another functional structure, such as a liquid injection hole and an explosion-proof valve.

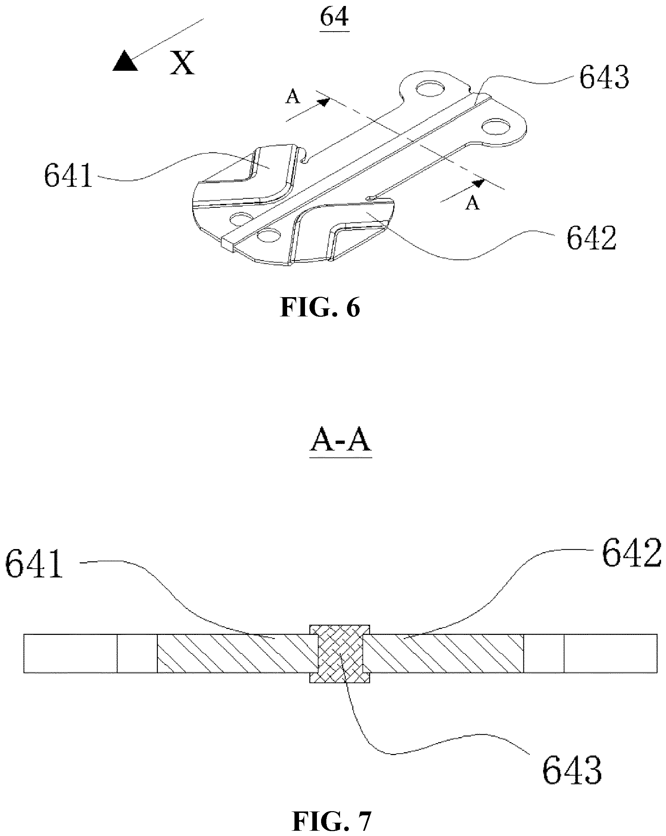

Referring to Fig. 4, Fig. 5, and 6. Fig. 6 is a structural schematic diagram of adapter 64 according to some embodiments of the present application. In the present application, adapter 64 includes first adapter portion 641 and second adapter portion 642. First adapter portion 641 is used to connect first tab 611 and first electrode terminal 62, and second adapter portion 642 is used to connect second tab 612 and second electrode terminal 63. Optionally, first adapter portion 641 may be made of aluminum to facilitate the connection with first tab 611 and first electrode terminal 62 through welding.; Second adapter portion 642 may be made of copper to facilitate the connection with second tab 612 and second electrode terminal 63 through welding. Optionally, the connections between first adapter portion 641 and first tab 611 and first electrode terminal 62 may be in other connection methods, such as clamping and riveting. Similarly, the connections between second adapter portion 642 and second tab 612 and the second electrode terminal 62 may also be in other connection methods, such as clamping and riveting.

Still referring to Fig. 6, in the present application, adapter 64 further includes first insulating portion 643 for connecting first adapter portion 641 and second adapter portion 642. First insulating portion 643 is located between first adapter portion 641 and second adapter portion 642 to prevent electrical connection between first adapter portion 641 and second adapter portion 642. When adapter 64 does not need to be bent, first insulating portion 643 may be made of an insulating material of any hardness, such as rubber and plastic. Optionally, since adapter 64 is configured inside battery cell 6, adapter 64 may be made of a corrosion resistant and high-temperature resistant insulating material, such as a resin material. When adapter 64 needs to be bent, first insulating portion 643 needs to have certain flexibility to bend together with first adapter portion 641 and second adapter portion 642. Therefore, first insulating portion 643 may be made of an insulating material with certain flexibility, such as synthetic resin. Optionally, when first insulating portion 643 is made of a plastic material, first insulating portion 643 may be molded together with first adapter portion 641 and second adapter portion 642 by an injection molding process. Alternatively, first insulating portion 643, first adapter portion 641, and second adapter portion 642 may be connected by clamping, insertion, and the like after being molded respectively.

Still referring to Fig. 6, in the present application, first insulating portion 643 is located between first adapter portion 641 and second adapter portion 642 to prevent electrical connection between first adapter portion 641 and second adapter portion 642. Optionally, together referring to Fig. 7, Fig. 7 is a sectional diagram in an A-A direction as shown in Fig. 6. First insulating portion 643 may be all located between first adapter portion 641 and second adapter portion 642, or as shown in Fig. 7, a part of first insulating portion 643 is located between first adapter portion 641 and second adapter portion 642. When first insulating portion 643 is clamped between first adapter portion 641 and second adapter portion 642, a part of first insulating portion 643 may cover a part of first adapter portion 641 or second adapter portion 642 in the extension direction of adapter 64. In this way, a creepage distance of first adapter portion 641 and second adapter portion 642 in the extension direction of adapter 64 may be increased, so that first adapter portion 641 and second adapter portion 642 are not likely to form lapping in this direction due to some metal chips existing in or generated in the battery, and the safety of adapter 64 in use may be improved. Optionally, first insulating portion 643 may also be all located between first adapter portion 641 and second adapter portion 642. The creepage distance may be increased by increasing the width of first insulating portion 643 arranged between first adapter portion 641 and second adapter portion 642, and the safety of battery cell 6 may also be improved.

Battery cell 6 is provided in an embodiment of the present application, and the battery cell 6 is provided with adapter 64 including first adapter portion 641 and second adapter portion 642. First adapter portion 641 and second adapter portion 642 are connected by first insulating portion 643. In this way, on the one hand, an internal short circuit caused by the lapping of adapters 64 with different polarities inside battery cell 6 during use may be reduced, thereby improving the safety performance of battery cell 6; on the other hand, when adapter 64 needs to be bent, bent adapter 64 may be caused to have good consistency to avoid lapping during bending, which is also capable of improving the safety performance of battery cell 6. At the same time, integrated adapter 64 can simplify the process and improve the production efficiency.

In some embodiments of the present application, still referring to Fig. 6 and Fig. 7, in length direction X of adapter 64, first insulating portion 643 may be continuously arranged between first adapter portion 641 and second adapter portion 642. First insulating portion 643 may form a continuous strip structure between first adapter portion 641 and second adapter portion 642. In this way, first insulating portion 643 is arranged between first adapter portion 641 and second adapter portion 642 for insulation protection, which can reduce a risk of the internal short circuit of adapter 64 and improve the safety of adapter 64. When adapter 64 needs to be bent, first insulating portion 643, first adapter portion 641, and second adapter portion 642 may be bent together, which can improve the consistency of bending of adapter 64.

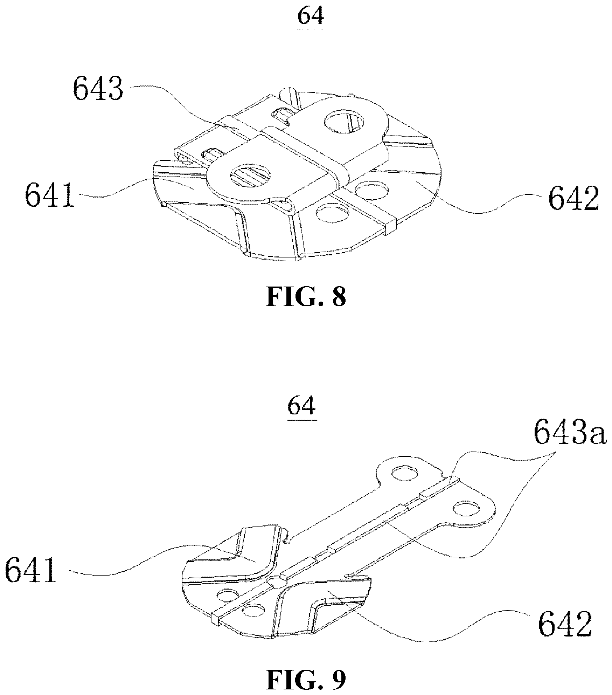

In some embodiments of the present application, refer to Fig. 8, which is a structural schematic diagram of adapter 64 shown in Fig. 6 after bending. In some battery cells 6, adapter 64 needs to be shaped by bending to facilitate the welding of electrode terminals and tabs. Optionally, adapter 64 may be bent several times, for example, it may be bent once into a U shape or bent twice into an S shape and the like. Fig. 8 shows only a structure of adapter 64 obtained after being bent twice. When welding, the electrode terminal and the tab may be respectively welded on two surfaces at both ends of adapter 64 which are opposite to each other. Optionally, welding may be performed first and then the adapter 64 is bent, which is more convenient for processing.

First insulating portion 643 may be made of a flexible material, so that first insulating portion 643 is easy to bend, and is capable of forming certain elastic deformation when bending.

In some embodiments of the present application, refer to Fig. 9, which is a structural schematic diagram of adapter 64 according to the other embodiments of the present application. First insulating portion 643 may include a plurality of insulating blocks 643a arranged at intervals. The plurality of insulating blocks 643a may all be located between first adapter portion 641 and second adapter portion 642. The interval size may be selected according to the width of insulating block 643a, the length of adapter 64, and a preset creepage distance between first adapter portion 641 and second adapter portion 642, so that first adapter portion 641 and second adapter portion 642 are not likely to form lapping. For example, at least one insulating block 643a may be arranged at each large surface of folded adapter 64. In this way, consumables for manufacturing first insulating portion 643 may be reduced, thus reducing the cost while first adapter portion 641 and second adapter portion 642 are not likely to form lapping.

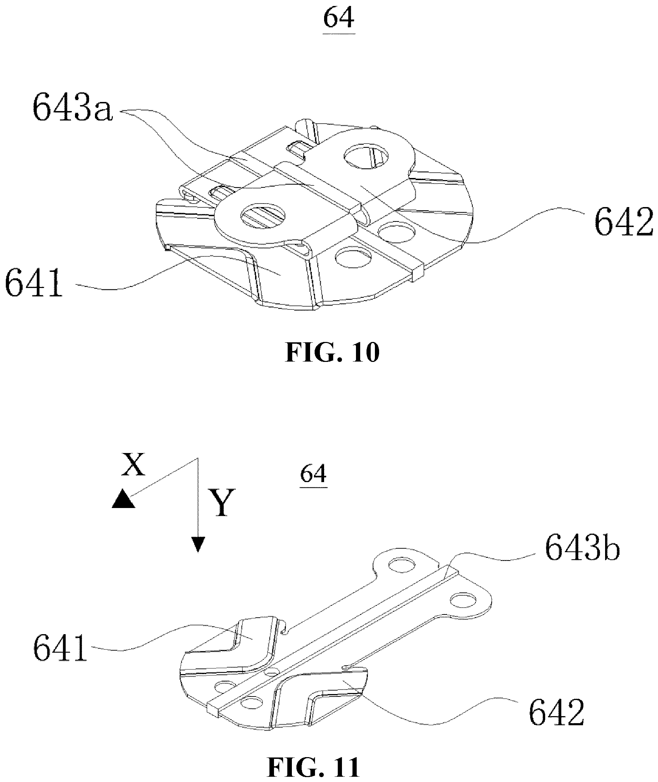

In some embodiments of the present application, refer to Fig. 10, which is the structural schematic diagram of adapter 64 shown in Fig. 9 after bending. As shown in Fig. 10, adapter 64 may be shaped by bending at an interval between at least two adjacent insulating blocks 643a. A plurality of intervals may be formed between the plurality of insulating blocks 643a, and adapter 64 may be shaped by bending at at least one interval. Since no insulating block 643a is arranged at the interval, it is easier to bend. Optionally, first adapter portion 641 and second adapter portion 642 close to a bending region may be arranged to have a large interval distance to reduce the probability of form lapping at the bending region.

In some embodiments of the present application, refer to Fig. 11, which is a structural schematic diagram of adapter 64 according to still other embodiments of the present application. As shown in Fig. 11, in thickness direction Y of adapter 64, first insulating portion 643 protrudes from surfaces of first adapter portion 641 and second adapter portion 642 to form first protruding part 643b. First protruding part 643b protruding from first adapter portion 641 and second adapter portion 642 may be used for increasing the creepage distance between the two, so that first adapter portion 641 and second adapter portion 642 are not likely to form lapping when affected by another component such as the tab, or metal chips generated during processing. The protrusion height and protrusion area of first protruding part 643b protruding from first adapter portion 641 and second adapter portion 642 may be designed according to the creepage distance required by battery cell 6. In addition, the protruding direction of first protruding part 643b is not limited. Optionally, first protruding part 643b may protrude toward a direction away from adapter 64 on both surfaces of adapter 64, or may protrude toward the direction away from battery cell 6 only on any one of the surfaces.

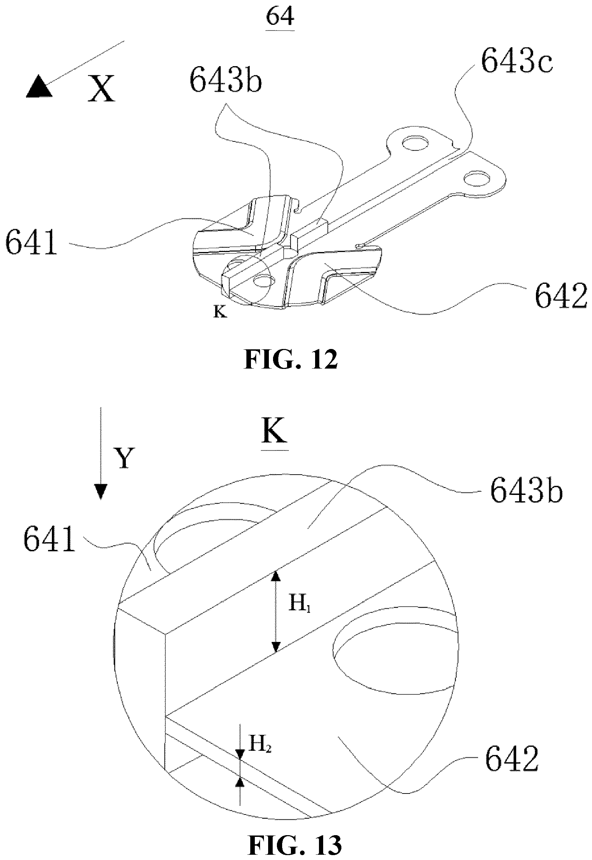

In some embodiments of the present application, referring to Fig. 12, Fig. 12 is a structural schematic diagram of adapter 64 according to other embodiments of the present application. As shown in Fig. 12, in length direction X of adapter 64, first insulating portion 643 is arranged at one end of adapter 64, first adapter portion 641 and second adapter portion 642 have gap 643c at the other end of adapter 64, and adapter 64 is shaped by bending so that first protruding part 643b is inserted into gap 643c.

After adapter 64 is bent, because first protruding part 643b is inserted into gap 643c, first adapter portion 641 and second adapter portion 642 may be respectively located on both sides of first protruding part 643b after bending, so that first insulating portion 643 is still arranged between first adapter portion 641 and second adapter portion 642 as a support to prevent first adapter portion 641 and second adapter portion 642 from lapping to cause internal short circuit. Optionally, the length and width of first protruding part 643b inserted into gap 643c are not limited, and may be adapted to gap 643c so that first adapter portion 641 and second adapter portion 642 do not form lapping. Preferably, the width and length of gap 643c may be larger than the width and length of first protruding part 643b. In this way, first protruding part 634b may be easily clamped into the gap at the other end to reduce accuracy control requirements for adapter 64 when bending.

Optionally, the length of first protruding part 643b in X direction (not shown) is made to be less than or equal to the length of bent adapter 64 in X direction (not shown). In this way, first protruding part 643b after bending will not interfere with adapter 64 being assembled into battery cell 6. Furthermore, first insulating portion 643 and first protruding part 643b formed by its protrusion do not exceed a bend of adapter 64 when extending in X direction, so that adapter 64 is more easily shaped by bending.

Optionally, adapter 64 may also be provided with a plurality of insulating blocks 643a spaced at intervals, and insulating blocks 634a all protrude toward a folding direction. After folding, a protruding part of at least one insulating block 643a may be inserted into the interval, which may also reduce the probability of lapping between first adapter portion 641 and second adapter portion 642, and improve the safety of battery cell 6.

In some embodiments of the present application, referring to Fig. 13, Fig. 13 is a partially enlarged diagram at K in Fig. 12. As shown in Fig. 13, in thickness direction Y of adapter 64, height H1 of first protruding part 643b is greater than or equal to a maximum thickness of first adapter portion 641 or second adapter portion 642 (the thickness of second adapter portion 642 is shown as H2 in the drawing).

First insulating portion 643 is arranged between first adapter portion 641 and second adapter portion 642, and first insulating portion 643 may extend out of surfaces of first adapter portion 641 and second adapter portion 642 in a direction away from the two to form first protruding part 643b. When first adapter portion 641 and second adapter portion 642 form a flush surface under the connection of first insulating portion 643, height H1 of first protruding part 643b may refer to the height of first protruding part 643b protruding from the surface of first adapter portion 641 or second adapter portion 642 in the Y direction. When first adapter portion 641 and second adapter portion 642 do not form a flush surface under the connection of first insulating portion 643, protrusion height H1 of first protruding part 643b may refer to the height of first protruding part 643b protruding from the surface of first adapter portion 641 in the Y direction, or the height of first protruding part 643b protruding from the surface of second adapter portion 642 in the Y direction, whichever is greater. In this way, when adapter 64 is bent into a U shape, first protruding part 643b with more volume may be located in gap 643c by fully fitting opposite surfaces after bending, so as to improve the effect of insulating first adapter portion 641 and second adapter portion 642 from each other. Optionally, when adapter 64 is bent to an S shape or another shape, and the opposite surfaces of adapter 64 after bending are not fully fitted, protrusion height H1 of first protruding part 643b may be set to a larger value.

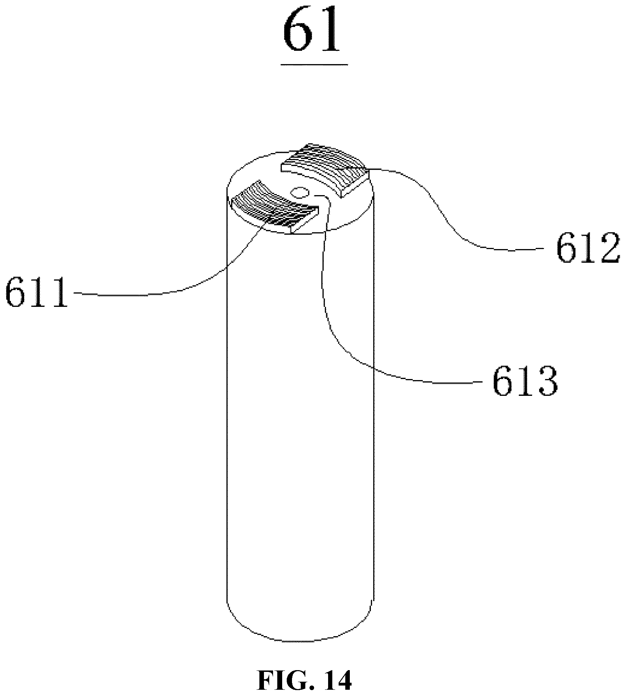

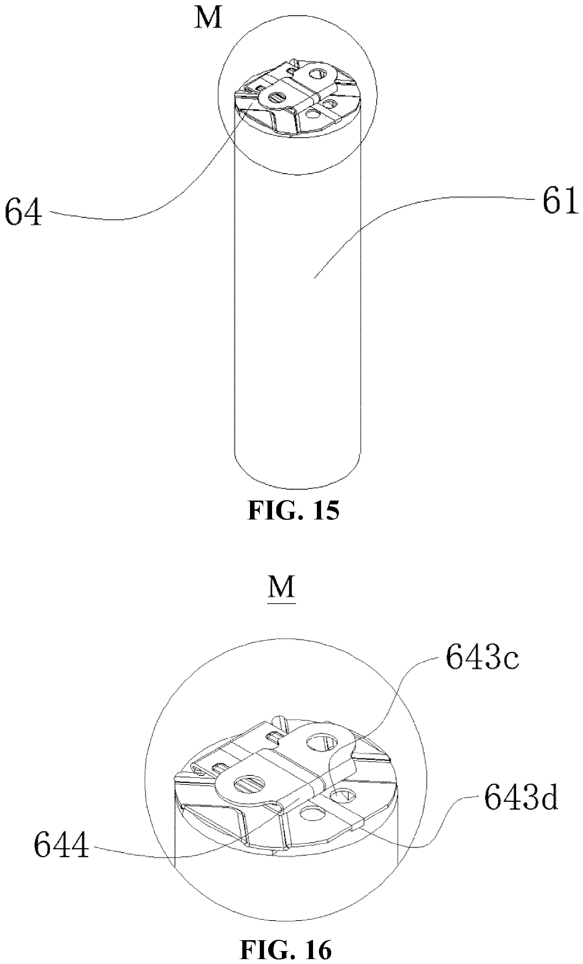

Referring to Fig. 14, Fig. 15, and Fig. 16. Fig. 14 is a structural schematic diagram of electrode assembly 61 according to some embodiments of the present application, Fig. 15 is a schematic assembling diagram of adapter 64 and electrode assembly 61 according to some embodiments of the present application, and Fig. 16 is a partially enlarged diagram at M in Fig. 15. In some embodiments of the present application, spacing space 613 is arranged between first tab 611 and second tab 612, first insulating portion 643 protrudes toward spacing space 613 to form second protruding part 643d, and at least a part of second protruding part 643d is located in spacing space 613.

Since first tab 611 and second tab 612 are also prone to form lapping at the same end, causing the internal short circuit of battery cell 6, causing first insulating portion 643 to form second protruding part 643d and inserting the second protruding part into spacing space 613 can not only prevent the short circuit caused by direct contact between first tab 611 and second tab 612, but also increase the creepage distance between first tab 611 and second tab 612, so that it is not likely for the two to form a short circuit under the lapping of another component or metal foreign matters, thereby improving the safety performance of battery cell 6.

In some embodiments of the present application, still referring to Fig. 16, a region near the bend on adapter 64 is provided with weak region 644. Weak region 644 may be arranged on first adapter portion 641, second adapter portion 642, or first insulating portion 643. Weak region 644 may be a thickness thinning region, a region made of a material with a lower stiffness, or a region with a smaller width than other positions, which may make the region less rigid and easier to bend.

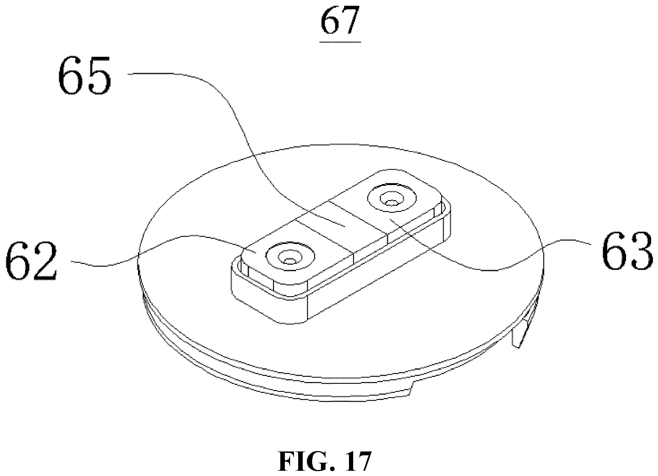

In some embodiments of the present application, referring to Fig. 17, Fig. 17 is a structural schematic diagram of end cover 67 according to some embodiments of the present application. As shown in Fig. 17, battery cell 6 further includes second insulating portion 65, and second insulating portion 65 is used to connect first electrode terminal 62 and second electrode terminal 63. Second insulating portion 65 is located between first electrode terminal 62 and second electrode terminal 63 to prevent electrical connection between first electrode terminal 62 and second electrode terminal 63.

Second insulating portion 65 may connect first electrode terminal 62 and second electrode terminal 63 as a whole, which may reduce the manufacturing process of battery cell 6, improve the efficiency, prevent electrical connection between first electrode terminal 62 and second electrode terminal 63 during connection. By setting dimensions of second insulating portion 65, such as length, width, and height, the creepage distance between first electrode terminal 62 and second electrode terminal 63 may be further improved, thereby preventing metal foreign matters falling between first electrode terminal 62 and second electrode terminal 63 from easily lapping the two to cause a short circuit.

Second insulating portion 65 may be completely located between first electrode terminal 62 and second electrode terminal 63, or only partially located between first electrode terminal 62 and second electrode terminal 63. For example, second insulating portion 65 may be in a "H" shape with both ends closed. In this way, first electrode terminal 62 and second electrode terminal 63 may be assembled with the second insulating portion 65 by clamping.

Second insulating portion 65 may be made of any material with insulative properties. Optionally, since second insulating portion 65 is located on an end face of battery cell 6, it is easy to be impacted, and second insulating portion 65 may be made of an insulating material with a certain hardness, such as a plastic material.

Although the present application has been described with reference to the preferred embodiments, various amendments can be made thereto and components thereof can be replaced with equivalents without departing from the scope of the present application. In particular, the various technical features mentioned in the various embodiments can be combined in any manner as long as there is no structural conflict. The present application is not limited to the specific embodiments provided herein, but rather includes all technical solutions falling within the scope of the claims.

## Claims

1. A battery cell, comprising:
a first electrode terminal and a second electrode terminal with opposite polarities;
an electrode assembly comprising a first tab and a second tab with opposite polarities, the first tab and the second tab being located at the same end of the electrode assembly; and
an adapter comprising a first adapter portion and a second adapter portion, the first adapter portion being used to connect the first tab and the first electrode terminal, and the second adapter portion being used to connect the second tab and the second electrode terminal;
wherein the adapter is further provided with a first insulating portion, the first insulating portion is used to connect the first adapter portion and the second adapter portion, and the first insulating portion is located between the first adapter portion and the second adapter portion to prevent electrical connection between the first adapter portion and the second adapter portion.

2. The battery cell according to claim 1, wherein in the length direction of the adapter, the first insulating portion is continuously arranged between the first adapter portion and the second adapter portion.

3. The battery cell according to claim 1 or 2, wherein the first insulating portion is made of a flexible material, and the adapter is shaped by bending.

4. The battery cell according to claim 1, wherein the first insulating portion comprises a plurality of insulating blocks arranged at intervals, and the plurality of insulating blocks are arranged between the first adapter portion and the second adapter portion.

5. The battery cell according to claim 4, wherein the adapter is shaped by bending at intervals between at least two adjacent insulating blocks.

6. The battery cell according to any one of claims 1 to 5, wherein in the thickness direction of the adapter, the first insulating portion protrudes from surfaces of the first adapter portion and the second adapter portion to form a first protruding part.

7. The battery cell according to claim 6, wherein in the length direction of the adapter, the first insulating portion is arranged at one end of the adapter, the first adapter portion and the second adapter portion have a gap at the other end of the adapter, and the adapter is shaped by bending so that the first protruding part is inserted into the gap.

8. The battery cell according to claim 6, wherein in the thickness direction of the adapter, the height of the first protruding part is greater than or equal to a maximum thickness of the first adapter portion or the second adapter portion.

9. The battery cell according to any one of claims 1 to 8, wherein a spacing space is arranged between the first tab and the second tab, the first insulating portion protrudes toward the spacing space to form a second protruding part, and at least part of the second protruding part is located in the spacing space.

10. The battery cell according to claim 3, 5, or 7, wherein a region near the bend on the adapter is provided with a weak region.

11. The battery cell according to any one of claims 1 to 8, wherein the first electrode terminal and the second electrode terminal are located at the same end of the battery cell, the battery cell further comprises a second insulating portion, the second insulating portion is used to connect the first electrode terminal and the second electrode terminal, and the second insulating portion is located between the first electrode terminal and the second electrode terminal to prevent electrical connection between the first electrode terminal and the second electrode terminal.

12. A battery, comprising:
the battery cell according to any one of claims 1 to 11; and
a box body used to accommodate the battery cell.

13. An electrical apparatus, comprising the battery according to claim 12, the battery being used to provide electric energy.
